# EUROPEAN PATENT APPLICATION

(11) **EP 1 101 400 A1**
(43) Date of publication of application: **23.05.2001**
(21) Application number: 00200037.0
(22) Date of filing: 10.01.2000
(51) Int. Cl.: A01G 1/02, A01G 13/02

(54) **Improved sheet for the cultivation of asparagus**

(30) Priority: 18.11.1999 ES 9902637
(71) Applicant: Reyenvas S.A., 41500 Alcala de Guadaira (Sevilla) (ES)
(72) Inventor: Alvarez Ribalaygua, José Ramon, 39300 Torrelavega (Cantabria) (ES)
(74) Representative: Canela Giménez, Teresa

(57) **Abstract**

The invention consists of an improved sheet for the cultivation of asparagus, of the type which are formed by a main sheet (1) of flexible plastics material of suitable colour, having on their longitudinal edges turned-over borders (4) along the latter, obtained by intermittent parallel welding and with pockets (5) produced with the material of the sheet (1) itself, characterized in that on the said sheets (1) there is juxtaposed and joined by welding only along its sides, also including the lower side where suitable, a strip (2) which is also of flexible plastics material but opaque, in order to provide, as desired, cachectic production areas, to size, at the desired points of the asparagus growing bed.

## Description

The subject of the present invention patent relates to an improved sheet for the cultivation of asparagus.

This type of sheets of plastics material has long been known. Spanish patent No. 332.881 of the Spanish company Pirelli Plast, S.A., of the 19th October 1966, expired, describes as already known sheets of flexible laminar material with turned-over borders at the ends of their major sides and, as new, a method with its corresponding machine for obtaining said sheets with turned-over borders.

US patent 3542710 also describes as known these types of laminar protectors. In said US patent there is described an enclosure formed by a sheet of translucent, tinted, flexible plastics material, basically formed by a composition of polyvinyl chloride, a heat-stabilizer, a UV-ray absorber, a plasticizer, a lubricant and a colouring agent. Said material has a longer life and greater strength and a better light transmission than those known previously.

Longitudinal turned-over borders are also known from GB Patent 1408088 of the 24th January 1973, in which is claimed a method for controlled illumination of cultivated plants, using a plastics film covered with two layers: a black layer directed towards the plants and another layer, directed towards the light, which contains a pigment which repels heat. Said method provides a reduction in the temperature of the section which is underneath the cover, avoiding overheating of the plants.

Spanish Utility Model No. 9200933 of the 10th March 1992 describes the longitudinal turned-over borders at the edges of the major sides of a flexible covering sheet. There will likewise be observed transverse seams of said turned-over borders which subdivide the latter, forming pockets, converting them into independent compartments.

In practice it has been found that said sheets with pockets can be improved further. For this purpose the improvements of the invention have been provided, which consist in starting from a sheet of transparent, flexible plastics material, with compartments of opaque material as desired, formed by the juxtaposition of a strip of opaque, flexible laminar material.

The result thereby obtained, in contrast to the sheets with white-painted outer face and inner faces of opaque material, is that the user of such sheets can determine, to size, according to his cultivation requirements, the opaque areas of the covering sheet.

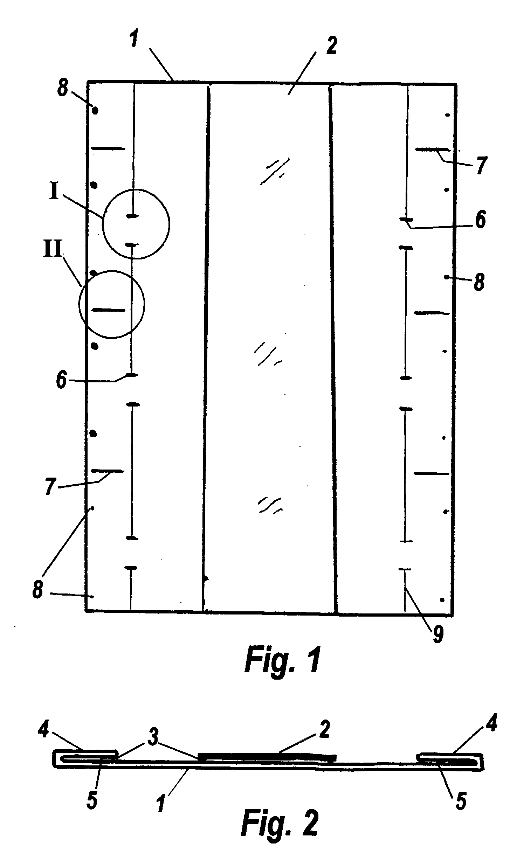

For a correct description, there will now be described, by way of non-limiting example, an embodiment of the new covering sheet, accompanied by two pages of drawings in which
Figure 1 shows the development of the new sheet;
Figure 2 shows a cross-section of the sheet; and

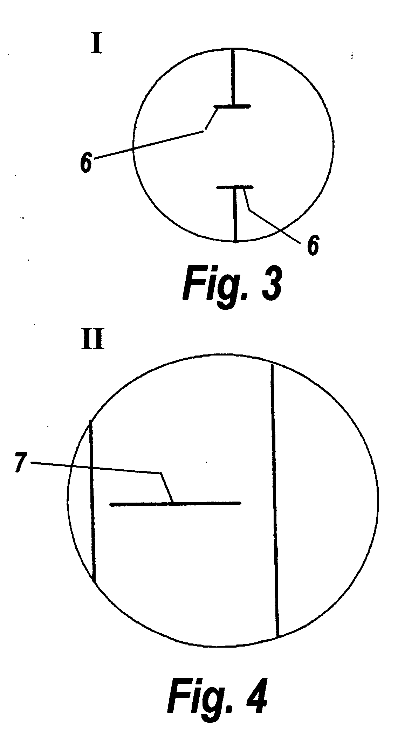

Figures 3 and 4 respectively show details of points I and II, indicated in the sheet in Figure 1.

The invention consists in that on a sheet (1) of flexible, plastics material, used to cover crops of asparagus, independently of the turned-over borders and pockets which are arranged on said sheets, there is juxtaposed and soldered by its lateral edges and lower transverse edge, where suitable, an opaque strip also of flexible plastics material (2), with separation (3) between the lower sheet of flexible material (1) and the juxtaposed opaque sheet (2).

The strip of opaque material (2) is joined onto the sections of the full length of the flexible sheet (1), to convert said sections into athermal sections.

This added strip (2) of smaller dimensions than those of the main sheet (1) on which it is juxtaposed is placed at any point on the latter and to the order of the user of the sheet according to the cachectic area to be produced on the asparagus growing bed and according to the type and dimensions of said growing bed, in order to obtain, in accordance with the opaque strip (2), a strip of greater or lesser length and breadth which interrupts the ultra-violet radiation of the sun.

In this way, the new improved sheet of thermal film (1), variable in thickness according to the requirements of the user thereof, has constructed on its longitudinal edges, turned-over borders (4) with intermittent welding and pocket (5) for the entry of soil which maintains the film on the cultivation ridge.

To said sheet, and preferably in its central part, there is welded a sheet (2) of film having a predetermined width and at least 50 mm thick, which may be black in colour, or bicoloured black/white, depending on what is required by the user of the covering sheet, but in any case opaque.

By this means there is obtained an improved sheet which provides an acceptable degree of thermal insulation, since the sunlight heats the sides of the planting ridge, preventing, moreover, by its thermal action, the heat from escaping during the night, so that a significant forwardness of growth is obtained and by also having superposed on it an opaque strip which coincides with the area in which the majority of the production of asparagus takes place, the latter remains white through lack of solar radiation.

On the intermittent longitudinal weld of the major sides of the main sheet there is provided a reinforcement consisting of a transverse weld (6) of approximately 20 mm in length which is carried out at the start and end of each longitudinal weld, so that the result obtained is that the intermittent longitudinal weld (9) of the folded-over border can not cause it to come apart and/or break. This furthermore guarantees a greater uniformity in the width of the pocket which is a non-welded area.

Whereas the transverse weld (7) is approximately 80 mm in length within the pocket and will be placed 10 mm from the edge of the film and about 20 mm from the edge of the main longitudinal weld thereof, which determines the turned-over border, therefore forming the pocket. Account should be taken of the centre of each longitudinally welded section so that the distance between one weld and another is the same as that between one pocket and another.

This transverse weld guarantees that when the sheet is handled, lifting it in order to harvest the asparagus, the soil remains in its corresponding pocket without passing to the adjacent pockets, so that a loss of soil in some pockets and an accumulation of soil in others is avoided. Moreover, not completely closing the passage between one pocket and another facilitates the drainage of water through the pockets to the drainage holes (8) in any direction, without allowing the accumulation of water.

It is to be understood that in the present case any details of construction and finish which do not alter, change or modify the essence of the invention will be variable.

## Claims

1. Improved sheet for the cultivation of asparagus, of the type which are formed by a main sheet of flexible plastics material of suitable colour, having on their longitudinal edges turned-over borders along the latter, obtained by intermittent parallel welding and with pockets produced with the material of the sheet itself, characterized in that on the said sheets there is juxtaposed and joined by welding only along its sides, also including the lower side where suitable, a strip which is also of flexible plastics material but opaque, in order to provide, as desired, cachectic production areas, to size, at the desired points of the asparagus growing bed.
